# EUROPEAN PATENT APPLICATION

(11) **EP 3 006 204 A1**
(43) Date of publication of application: **13.04.2016**
(21) Application number: 15189042.3
(22) Date of filing: 09.10.2015
(51) Int. Cl.: B32B 17/10, E06B 3/67, H01Q 1/12

(54) **WINDOW PANE AND WINDOW**

(30) Priority: 10.10.2014 FI 20145889
(71) Applicant: Lammin Ikkuna Oy, 16900 Lammi (FI)
(72) Inventor: Saarinen, Hannu, 16900 LAMMI (FI)
(74) Representative: Heinänen Oy Patent Agency

(57) **Abstract**

Window pane (1), which comprises selective glass (2), which is coated with a selective coating (4), the surface provided with the selective coating (4) of which selective glass (2) comprising at least one uncoated area (10) for improving the penetration of radio waves. The window pane (1) comprises a second glass (5), which is fastened to the surface provided with the selective coating (4) of the selective glass (2) by laminating.

## Description

The object of the invention is a window pane as defined in the preamble of claim 1, the window pane comprising selective glass that is coated with a selective coating. The object of the invention is also a window.

Selective glasses are used in windows for improving the energy efficiency of buildings. Selective glasses have a thin coating of metal or metal oxide, which is electrically conductive. The short-wave thermal radiation of the sun and visible light pass through selective glass well, but long-wave thermal radiation trying to get outwards from inside is reflected back into the room space from the selective coating. For improving the penetration of radio waves, uncoated points can be made in selective glasses, through which points radio waves are able to travel to inside the building.

A problem in selective glasses is the corrosion of the selective coating and its susceptibility to mechanical damage e.g. when washing the window. If the selective coating is removed from the selective glass for improving the penetration of radio waves, corrosion might occur at the interface of the selective coating and the glass. In addition, a contrast difference between the uncoated and coated area might occur in the selective glass, which weakens the optical properties and the appearance of the glass.

The purpose of this invention is to achieve a window pane and a window, with which the problems described above can be reduced.

### Brief description of the invention

The aim of the invention is achieved with a window pane according to claim 1 and with a window according to claim 5. The window pane according to the invention comprises selective glass, which is coated with a selective coating. The surface provided with the selective coating of the selective glass comprises at least one uncoated area for improving the penetration of radio waves. In addition, the window pane comprises a second glass, which is fastened to the surface provided with the selective coating of the selective glass by laminating. The window according to the invention, for its part, comprises at least one window pane described above.

The solution according to the invention has a significant advantage in that the second glass laminated on top of the selective coating protects the selective coating from corrosion and from mechanical damage. In addition, the second glass and the lamination film being used in the lamination reduce the contrast differences occurring between the uncoated and coated areas and thus improve the optical properties and the appearance of the glass in selective glasses in which some of the surface provided with a selective coating has uncoated areas.

### Brief description of the figures

In the following, the invention will be described in more detail by the aid some embodiments with reference to the attached drawings, wherein
Fig. 1 presents a cross-section of a window pane according to one embodiment of the invention,
Fig. 2 presents a magnified detail of point A of Fig. 1, and
Fig. 3 presents the window of Fig. 1 as viewed from the front.
Fig. 4 presents a cross-section of a window according to one embodiment of the invention, in which there is an airtight gas space between two glasses, and
Fig. 5 presents a cross-section of a window according to a second embodiment of the invention.

### Detailed description of the invention

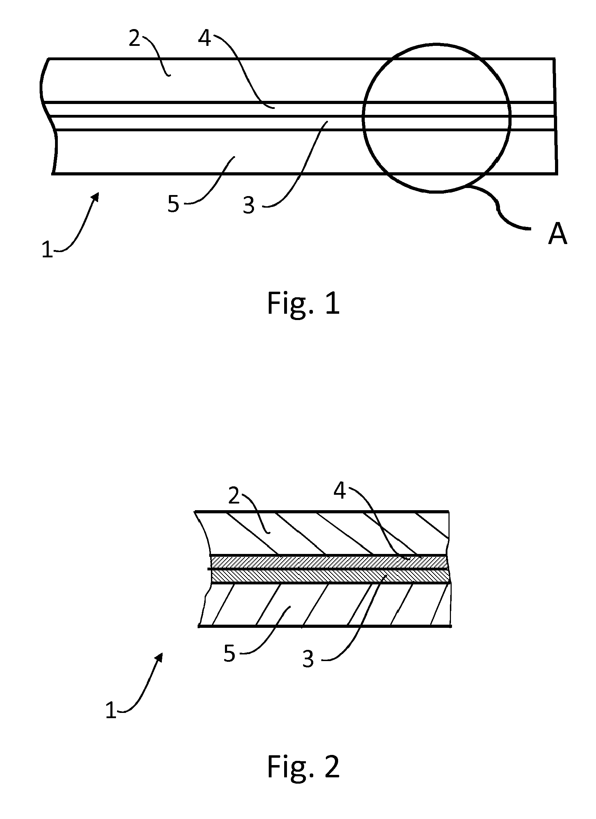

Figs. 1-3 present a window pane 1 according to one embodiment of the invention, which window pane can be used in the window of a building. The building can be e.g. a residential building, a leisure-time building, an office building, a commercial building or an industrial building. The window pane 1 comprises selective glass 2, which is coated with a selective coating 4.

The selective coating 4 is a thin coating of metal or metal oxide. The selective coating 4 can be electrically conductive. The selective coating allows visible light to pass through well, but prevents the propagation of other wavelengths, such as radio waves, through the window pane. The thickness of a selective coating 4 is typically 5-100 nm.

There are two types of selective coatings 4; hard coatings and soft coatings. A soft coating (a so-called off-line coating) is formed with the vacuum deposition method with a thin metallic layer, which has high emissivity and thermal radiation reflectability. A soft selective coating is susceptible to damage, and owing to this it is used in special glasses on the surfaces on the side of the airtight gas space. A hard coating (a so-called on-line coating) has reasonably good emissivity. Glass provided with a hard coating can be used as a part of the insulating glass of a window, but also in other glasses, e.g. on the outer surface of the outer pane of a window.

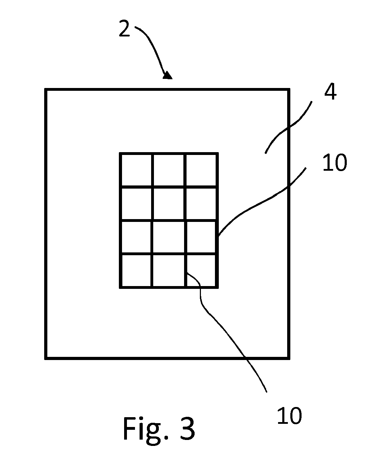

In the coated surface 2 on the selective coating 4 of the selective glass is an uncoated area 10 for improving the penetration of radio waves. The uncoated area 10 does not have a selective coating 4, e.g. a part of the selective coating 4 has been removed or the area has been left uncoated. The selective coating 4 can be removed from the surface of the glass e.g. by grinding or in some other suitable manner. Preferably the uncoated area 10 is latticed or of lattice shape, as in the embodiment of Fig. 3. A latticed uncoated area 10 has been observed to allow the passage of radio waves well while impairing the thermal properties of the glass only a little. The uncoated area can also be of circular, triangular, rectangular or parallelogram shape, or of some other shape.

A second glass 5 is laminated to the surface provided with the selective coating 4 of the selective glass 2, i.e. a second glass 5 is fastened to the surface provided with the selective coating 4 by laminating. The second glass 5 can be a conventional, uncoated sheet of glass. A lamination film 3 is arranged between the selective coating 4 and the second glass 5, with which the selective glass 2 and the second glass 5 are fastened to each other by laminating. The lamination film 3 is against the selective coating 4. The lamination film 3 is e.g. polyvinyl butyral (PVB). The selective glass 2 and the second glass 5 are laminated by melting the lamination film 3 between the glasses 2, 5 at high pressure and temperature. In this way a window pane 1 comprising two glasses is achieved. If necessary, the window pane 1 can comprise thee or more glasses laminated to each other. As is seen from Fig. 2, the different glasses and films of the window pane 1 are in the following sequence: glass of the selective glass 2, selective coating 4 of the selective glass, lamination film 3, and second glass, or *vice versa.* Alternatively, polymethylmethacrylate (PMMA) can be used as the material of the lamination film 3.

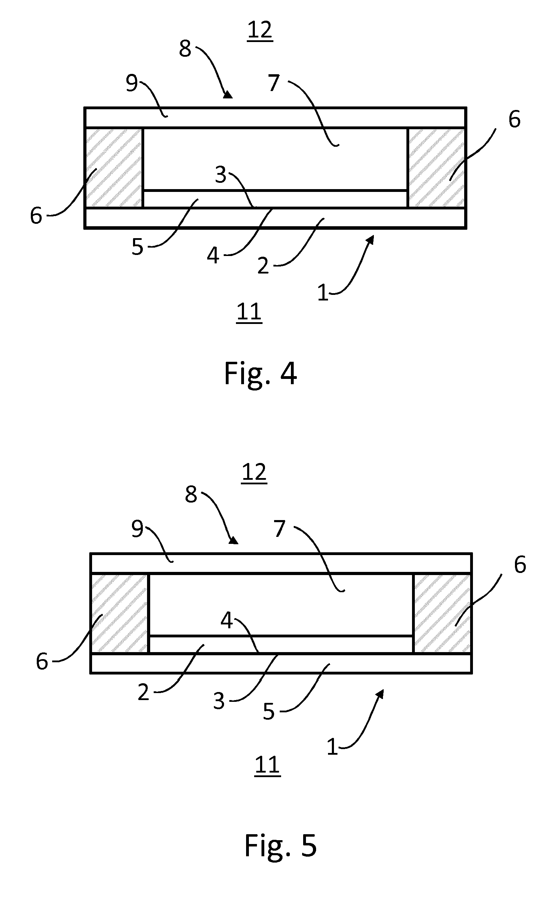

Fig. 4 presents a window 8 according to one embodiment of the invention, the window comprising a window pane 1 according to Figs. 1-3. The window pane 1 comprises selective glass 2, which is coated with a selective coating 4, and a second glass 5, which is laminated to the surface provided with the selective coating 4 of the selective glass. The window 8 comprises an airtight or gastight space 7, which is between the selective glass 2 of the window pane 1 and the third glass 9. The space 7 can be filled with a gas, e.g. argon, that improves the thermal insulating capacity of the window 8. The surface of the selective glass 2 on the airtight space 7 side is provided with a selective coating 4. The selective coating 4 can be of the soft selective coating type. The third glass 9 can be a conventional, uncoated glass. The selective glass 2 and the third glass 9 are installed in the window frame. Between the selective glass 2 and the third glass 9 are spacers 6, which seal the airtight space 7 on both sides, on the top and on the bottom.

The second glass 5 of the window pane 1 is laminated to the surface provided with the selective coating 4 of the selective glass 2, i.e. to the surface on the side of the airtight space 7. The second glass 5 is inside the area bounded by the spacers 6. Therefore the surface area of the second glass 5 is smaller than the surface area of the selective glass 2. The second glass 5 can be the same shape and the same size as the area bounded by the spacers 6. Between the surface provided with the selective coating 4 of the selective glass 2 and the second glass 5 is a lamination film 3 in such a way that the selective coating 4 and the second glass 5 are against the lamination film 3. The selective glass 2 and the second glass 5 are laminated to each other by melting the lamination film 3 between the glasses at high temperature and pressure.

The third glass 9 can be the outermost glass, i.e. the glass intended for the façade of the building, or some other glass intended for between the airtight space 7 and the outside 12 of the building. Correspondingly, the selective glass 2 is a glass intended for between the airtight space 7 and the inside 11 of the building, e.g. the innermost glass of the window 8. In the window 8 according to Fig. 4 the different glasses and films are arranged in the following sequence: the glass of the selective glass 2 (nearest the interior 11), the selective coating 4 of the selective glass, the lamination film 3, the second glass 5, the airtight space 7, and the third glass 9 (nearest the exterior 12).

Fig. 5 presents a window 8 according to a second embodiment of the invention, which window otherwise corresponds to the window of Fig. 4, but the selective glass 2 of the window pane 1 and the second glass 5 are in the reverse sequence with respect to the embodiment of Fig. 4. In this case the airtight space 7 is between the second glass 5 and the third glass 9. The surface provided with the selective coating 4 of the selective glass 2 is against the surface of the second glass 5 that faces the airtight space 7. Between the surface provided with the selective coating 4 of the selective glass 2 and the second glass 5 is a lamination film 3 in such a way that the selective coating 4 and the second glass 5 are against the lamination film 3. The selective glass 2 and the second glass 5 are laminated to each other by melting the lamination film 3 between the glasses at high temperature and pressure. The second glass 5 and the third glass 9 are installed in the window frame.

The selective glass 2 is inside the area bounded by the spacers 6. Therefore the surface area of the selective glass 2 is smaller than the surface area of the second glass 5. The selective glass 2 can be the same shape and the same size as the area bounded by the spacers 6.

In the window 8 of the embodiment of Fig. 5 the glasses and films are arranged in the following sequence: the second glass 5 (nearest the interior 11), the lamination film 3, the selective coating 4 of the selective glass, the glass of the selective glass, the airtight space 7, and the third glass 9 (nearest the exterior 12).

The window 8 can also comprise more window panes 1 according to Figs. 1-3. The window does not need to have an airtight space 7, but instead it can be a conventional window comprising one or more window panes. In this case at least one window pane is a window pane 1 according to the embodiment of Figs. 1-3, which window pane comprises selective glass 2, which is coated with a selective coating 4, and a second glass 5, which is laminated to the surface provided with the selective coating 4 of the selective glass.

The second glass 5 laminated to the surface provided with the selective coating 4 of the selective glass 2 can be the outermost glass of the window 8, i.e. the glass intended for the façade of the building. In this case the second glass 5 protects the selective coating 4 from corrosion and mechanical damage.

The solution according to the invention can also be used in window panes and in windows in which the selective coating 4 of the selective glass does not have uncoated areas 10. In this case the second glass 5 fastened by laminating to the surface provided with the selective coating 4 of the selective glass 2 protects the selective coating 4 from corrosion and/or mechanical damage.

It is obvious to the person skilled in the art that the different embodiments of the invention are not limited solely to the examples described above, but that they may be varied within the scope of the claims presented below.

## Claims

1. Window pane (1), which comprises selective glass (2), which is coated with a selective coating (4), and the surface provided with the selective coating (4) of which selective glass (2) comprising at least one uncoated area (10) for improving the penetration of radio waves, **characterized in that** the window pane (1) comprises a second glass (5), which is fastened to the surface provided with the selective coating (4) of the selective glass (2) by laminating.

2. Window pane (1) according to claim 1, **characterized in that** between the selective coating (4) of the selective glass and the second glass (5) is a lamination film (3), with which the selective glass (2) and the second glass (5) are fastened to each other.

3. Window pane (1) according to claim 2, **characterized in that** the lamination film (3) is polyvinyl butyral (PVB).

4. Window pane (1) according to claim 3, **characterized in that** the uncoated area (10) is latticed.

5. Window (8) **characterized, in that** it comprises at least one window pane (1) according to any of the preceding claims 1-4.

6. Window (8) according to claim 5, **characterized in that** the second glass (5) of the window pane (1) is the outermost glass of the window (8), i.e. the glass intended for the fagade.

7. Window (8) according to claim 5 or 6, **characterized in that**
- the window (8) comprises a third glass (9),
- between the third glass (9) and the selective glass (2) of the window pane (1) is an airtight space (7),
- the surface of the selective glass (2) on the airtight space (7) side is provided with a selective coating (4), and
- the second glass (5) of the window pane (1) is fastened to the surface provided with the selective coating (4) of the selective glass (2) by laminating.

8. Window (8) according to claim 5 or 6, **characterized in that**
- the window (8) comprises a third glass (9),
- between the third glass (9) and the second glass (5) of the window pane (1) is an airtight space (7), and
- the surface of the second glass (5) on the airtight space (7) side is against the surface provided with the selective coating (4) of the selective glass (2) of the window pane (1).

9. Window (8) according to claim 7 or 8, **characterized in that** the window (8) comprises spacers (6), which seal the airtight space (7) on both sides, on the top and on the bottom.

10. Window (8) according to claim 7 and 9, **characterized in that** the second glass (5) is arranged inside the area bounded by the spacers (6).
